# EUROPEAN PATENT APPLICATION

(11) **EP 4 495 848 A1**
(43) Date of publication of application: **22.01.2025**
(21) Application number: 24188637.3
(22) Date of filing: 15.07.2024
(51) Int. Cl.: G06Q 10/047, G06Q 10/0631, G06Q 10/08, G06Q 50/40, G06F 9/50

(54) **INTELLIGENT SYSTEMS AND METHODS FOR AUTONOMOUS MOVEMENT OPTIMIZATION**

(30) Priority: 18.07.2023 US 202363527480 P
(71) Applicant: United Parcel Service Of America, Inc., Atlanta, GA 30328 (US)
(72) Inventor: NEAL, Jeffrey, Atlanta, GA (US); POFF, Joseph, Atlanta (US)
(74) Representative: Zacco Sweden AB

(57) **Abstract**

In general, various embodiments of the present disclosure provide methods, systems, computer-readable medium, and/or the like for coordinating movement of items within a facility. In various embodiments, a method is provided that comprises: obtaining requests that involve moving items between locations found at a facility; obtaining geographical data that comprises amounts of time involved in moving the items between the locations; obtaining state data that comprises current locations of resources available to execute the requests; and generating a movement plan that identifies a specific resource for each request by: processing the requests via iterations, wherein each iteration involves: processing the requests yet to be assigned a specific resource to identify a highest priority request; generating, based on the geographical and state data, an estimated amount of time for each eligible resource; and identifying, based on the estimated amount of time, the specific resource to execute the highest priority request.

## Description

### CROSS REFERENCE TO RELATED APPLICATIONS

This application claims priority from U.S. Provisional Patent Application Ser. No. 63/527,480, filed July 18, 2023, the disclosure of which is hereby incorporated herein by reference in its entirety.

### TECHNICAL FIELD

The present disclosure is generally related to data processing systems and corresponding methods for emulation of intelligence to facilitate autonomous movement of items in an optimized manner.

### BACKGROUND

Various environments exist that involve coordinated movements of items within a facility between different locations found throughout the facility. For example, a manufacturing facility may need to coordinate movements of different raw materials and/or partially manufactured materials used in manufacturing an end product between different assembly points along the manufacturing process. In another example, an integrated steel producing facility may need to coordinate movements of ingots and coils between yards and various operations that process various states of steel to produce different finished steel products. In yet another example, a shipping and logistics facility may need to coordinate movements of trailers between parking positions to the sorting buildings in an orchestrated manner to ensure that the trailers are in the right locations at the right time to enable timely unloading and loading of parcels from the trailers.

In each of these situations, different variables, parameters, constraints, policies, and/or the like can play a significant role in executing movements of the items. However, the complexity that goes along with managing various aspects of these different variables, parameters, constraints, policies, and/or the like to identify what resources are required to efficiently perform movements of items can be a significant technical challenge for any facility of an entity such as an organization, business, company, manufacturer, and/or the like.

Therefore, a need exists in the art for systems, and corresponding methods, for managing the complexities involved with various aspects of these different variables, parameters, constraints, policies, and/or the like to facilitate coordinated movements of items within a facility in an efficient and effective manner. Further, a need exists in the art for systems, and corresponding methods, that can carry out facilitating coordinated movements of items within a facility with no, or minimal, manual intervention. Accordingly, various embodiments of the disclosure provided herein address such needs.

### SUMMARY

In general, various embodiments of the present disclosure provide methods, apparatuses, systems, computing devices, computing entities, and/or the like for coordinating movement of items within a facility. In various embodiments, a method is provided that comprises: obtaining, by computing hardware, (1) a set of requests that involve moving items between a plurality of locations found at a facility and (2) a priority for each request of the set of requests; obtaining, by the computing hardware, geographical data for the facility, wherein the geographical data comprises at least one of a set of amounts of time or a set of distances involved in moving the items between the plurality of locations and a set of constraints on moving the items between the plurality of locations; obtaining, by the computing hardware, state data for the facility, wherein the state data comprises current locations of a plurality of resources available to execute the set of requests; generating, by the computing hardware, a movement plan that identifies a specific resource from the plurality of resources to execute each request found in the set of requests by: generating, based at least in part on the priority, a set of clusters, wherein each cluster of the set of clusters comprises the requests from the set of requests with the priority being same or similar; and processing, by the computing hardware, each cluster of the set of clusters by conducting iterations on the cluster, wherein each iteration involves: processing the requests remaining in the cluster that have yet to be assigned the specific resource using a rules-based engine to identify a highest priority request from the request remaining in the cluster that have yet to be assigned the specific resource; generating, based at least in part on the geographical data and the state data, at least one of an estimated amount of time or an estimated distance for each resource in the plurality of resources that is eligible to execute the highest priority request, wherein the estimated amount of time or the estimated distance concerns executing the highest priority request to move the item involved in the highest priority request from a first location of the plurality of locations to a second location of the plurality of locations; and identifying, based at least in part on at least one of the estimated amount of time or the estimated distance for each resource in the plurality of resources that is eligible to execute the highest priority request, the specific resource to execute the highest priority request; generating, by the computing hardware and based at least in part on the movement plan, at least one assignment for having the specific resource identified for at least one request in the set of requests execute the at least one request; and communicating, by the computing hardware, the at least one assignment to initiate the specific resource executing the at least one request to move the item from the first location to the second location.

In particular embodiments, communicating the assignment involves sending an electronic communication over a wireless network to the specific resource. In some embodiments, the specific resource is autonomous equipment, and communicating the assignment involves sending an electronic instruction to the autonomous equipment to have the autonomous equipment move the item from the first location to the second location without human intervention. In some embodiments, the specific resource has at least one of the estimated amount of time or the estimated distance that is shorter than at least one of the estimated amount of time or the estimated distance for each other resource in the plurality of resources that is eligible to execute the highest priority request.

In particular embodiments, the set of constraints identifies each of the plurality of resources that is eligible to execute the highest priority request. In some embodiments, the plurality of resources comprises equipment configured to haul the items between the plurality of locations, and the set of constraints identifies each of the plurality of resources that is eligible to execute the highest priority request as able to at least one of travel to or have a certain capability needed for at least one of the first location or the second location. In additional or alternative embodiments, the plurality of resources comprises personnel operating equipment configured to haul the items between the plurality of locations, and the set of constraints identifies each of the plurality of resources that is eligible to execute the highest priority request as licensed to travel to at least one of the first location or the second location. In some embodiments, at least one constraint of the set of constraints is based at least in part on a time of day.

In additional embodiments, a system comprising a computer-readable medium storing instructions and a processing device communicatively coupled to the computer-readable medium is provided. The processing device is configured to execute the instructions and thereby perform operations comprising: obtaining (1) a set of requests that involve moving items between a plurality of locations found at a facility and (2) a priority for each request of the set of requests; obtaining geographical data for the facility, wherein the geographical data comprises at least one of a set of amounts of time or a set of distances involved in moving the items between the plurality of locations; determining to evaluate a movement plan for the facility that involves a set of requests to move the items between the plurality of locations; and responsive to determining to evaluate the movement plan: obtaining state data for the facility, wherein the state data comprises current locations of a plurality of resources available to execute the set of requests; generating, based at least in part on the priority, a cluster of requests, wherein the cluster of requests comprises the requests from the set of requests with the priority being same or similar; processing the cluster to generate the movement plan that comprises a specific resource to execute each request found in the cluster by conducting iterations on the cluster, wherein each iteration involves: processing the requests remaining in the cluster that have yet to be assigned the specific resource to identify a highest priority request; generating, based at least in part on the geographical data and the state data, at least one of an estimated amount of time or an estimated distance for each resource in the plurality of resources that is eligible to execute the highest priority request, wherein the estimated amount of time or the estimated distance concerns executing the highest priority request to move the item involved in the highest priority request from a first location of the plurality of locations to a second location of the plurality of locations; and identifying, based at least in part on at least one of the estimated amount of time or the estimated distance for each resource in the plurality of resources that is eligible to execute the highest priority request, the specific resource to execute the highest priority request; generating, based at least in part on the movement plan, at least one assignment for having the specific resource identified for at least one request in the set of requests execute the at least one request; and communicating the at least one assignment to initiate the specific resource executing the at least one request to move the item from the first location to the second location.

In particular embodiments, determining to evaluate the movement plan for the facility comprises determining a triggering event has occurred with respect to the facility. In particular embodiments, at least one of the estimated amount of time or the estimated distance for each resource of the plurality of resources is based at least in part on at least one of the current location of the resource, a distance of a route between the first location and the second location, an amount of time to travel the route, an obstacle involved with the route, or a constraint on the resource in executing the highest priority request. In additional or alternative embodiments, at least one of the estimated amount of time or the estimated distance for at least one resource of the plurality of resources is based at least in part on at least one of an actual time the at least one resource took or an actual distance the at least one resource traveled in performing a previous request with respect to at least one of an estimated amount of time or an estimated distance generated for the resource to perform the previous request.

In particular embodiments, processing the requests remaining in the cluster that have yet to be assigned the specific resource to identify the highest priority request is performed considering at least one of a type of request involved for each request in the cluster or a type of item involved in each request in the cluster. In additional or alternative embodiments, processing the requests remaining in the cluster that have yet to be assigned the specific resource to identify the highest priority request involves processing characteristics of each request remaining in the cluster using a machine-learning model to generate a representation on an importance of having the request executed to move the item associated with the request from the first location to the second location, and selecting the request remaining in the cluster with the representation having a highest importance as the highest priority request.

In additional embodiments, a computer-readable medium storing computer-executable instructions is provided. The computer-executable instructions, when executed by computing hardware, configure the computing hardware to perform operations comprising: obtaining (1) a set of requests that involve moving items between a plurality of locations found at a facility and (2) a priority for each request of the set of requests; obtaining geographical data for the facility, wherein the geographical data comprises at least one of a set of amounts of time or a set of distances involved in moving the items between the plurality of locations and a set of constraints on moving the items between the plurality of locations; obtaining state data for the facility, wherein the state data comprises current locations of a plurality of resources available to execute the set of requests; processing the set of requests to generate a movement plan that identifies a specific resource to execute each request found in the set of requests by conducting iterations on the set of requests, wherein each iteration involves: processing the requests remaining in the set of requests that have yet to be assigned the specific resource to identify a highest priority request; generating, based at least in part on the geographical data and the state data, at least one of an estimated amount of time or an estimated distance for each resource in the plurality of resources that is eligible to execute the highest priority request, wherein the estimated amount of time or the estimated distance concerns executing the highest priority request to move the item involved in the highest priority request from a first location of the plurality of locations to a second location of the plurality of locations; and identifying, based at least in part on at least one of the estimated amount of time or the estimated distance for each resource in the plurality of resources that is eligible to execute the highest priority request, the specific resource to execute the highest priority request; generating, based at least in part on the movement plan, at least one assignment for having the specific resource identified for at least one request in the set of requests execute the at least one request; and communicating the at least one assignment to initiate the specific resource executing the at least one request to move the item from the first location to the second location.

In particular embodiments, communicating the assignment involves sending an electronic communication over a wireless network to the specific resource. In some embodiments, the specific resource is autonomous equipment, and communicating the assignment involves sending an electronic instruction to the autonomous equipment to have the autonomous equipment move the item from the first location to the second location without human intervention. In additional or alternative embodiments, the specific resource has at least one of the estimated amount of time or the estimated distance that is shorter than at least one of the estimated amount of time or the estimated distance for each other resource in the plurality of resources that is eligible to execute the highest priority request.

In particular embodiments, the set of constraints identifies each of the plurality of resources that is eligible to execute the highest priority request. In some embodiments, at least one constraint of the set of constraints is based at least in part on a time of day.

### BRIEF DESCRIPTION OF THE DRAWINGS

In the course of this description, reference will be made to the accompanying drawings, which are not necessarily drawn to scale, and wherein:
FIG. 1 depicts an example of a computing environment that can be used for coordinating movements of items within a facility in accordance with various embodiments of the present disclosure;
FIG. 2 depicts an example of a process for generating movement assignments to different resources in accordance with various embodiments of the present disclosure;
FIG. 3 depicts an example of a process for generating a movement plan in accordance with various embodiments of the present disclosure;
FIG. 4 depicts an example of a system architecture that may be used in accordance with various embodiments of the present disclosure; and
FIG. 5 depicts an example of computing hardware that may be used in accordance with various embodiments of the present disclosure.

### DETAILED DESCRIPTION

### Overview

Various environments exist that involve coordinated movements of items within a facility from different locations found throughout the facility. For example, the items may involve different raw materials and/or partially manufactured materials used in manufacturing an end product such as automobiles. Here, the locations may involve different assembly points along the manufacturing process for assembling the automobiles. The coordinated movement of the raw materials and/or partially manufactured materials to the different assembly points to keep the manufacturing process operating in a continuous manner is essential in ensuring that the manufacturing facility is performing at a peak (e.g., efficient) level in producing automobiles.

In another example, an integrated steel producing facility may involve various operations within the facility that process various states of steel to produce different finished steel products. As a specific example, the integrated steel producing facility may have a casting operation that casts liquid steel into ingots. In addition, the facility may have a hot rolling operation that rolls the ingots into coils. Further, the facility may have a galvanize operation that coats the coils with zinc to produce finished galvanized steel product. Here, the ingots and coils may be stored in large yards in between operations. Accordingly, the ingots and coils must be moved in a coordinated manner between the yards and operations to ensure that the correct ingots and coils are at the next operations when needed so that the finished steel product is efficiently manufactured.

Yet in another example, a shipping and logistics organization may have hubs located around the World for the purpose of receiving, sorting, and shipping parcels. A hub facility may include one or more sorting buildings, as well as multiple parking positions (which may also be referred to as bays) for parking trailers in between the trailers being unloaded and loaded with parcels. Here, coordinating the movement of the trailers from the parking positions to the sorting buildings and vice versa must be performed in an orchestrated manner to ensure that the trailers are in the right locations at the right time to enable timely unloading and loading of the trailers. This is especially true for shipping and logistics organizations where often time is of the essence to facilitate on-time deliveries of parcels.

In each of these situations, different variables, parameters, constraints, policies, and/or the like exist that play a role in executing movements of items. For example, each of the facilities has a limited (set) number of resources, e.g., equipment, personnel, and/or the like, to carry out the movements at any given time. In addition, certain resources may only be able to perform certain types of movements. For example, equipment may only be configured to perform movements of certain types of items, or personnel may need to be licensed to drive certain routes. Further, each facility has a unique geographical configuration that must be navigated to perform movements of items. The various routes that are required to be navigated through the facility may be subject to certain policies and constraints. For example, a particular route may have several required stops (e.g., stop signs, stop lights, etc.) that hinder (slow down) traversing the route. In another example, a particular route may be subject to a policy in which the route may only be used at certain times of the day due to significant foot traffic that traverses the route at other times of the day.

Most entities that are required to conduct coordinated movements of items within a facility will manually orchestrate the various movements of the items. In some instances, these entities may utilize some type of software to assist personnel in manually identifying what movements are needed, and when. For example, personnel may use software to monitor certain data such as the current locations of resources and/or items in identifying what resources should be selected to perform a particular movement of an item.

However, the complexity of managing all the different variables, parameters, constraints, policies, and/or the like to identify what resources are required to efficiently perform movements of items can be a significant technical challenge for any facility. This is because manual execution of movements of items is a sophisticated and intricate responsibility, requiring personnel to understand and manage a multitude of variables, parameters, constraints, policies, and/or the like, as well as their states, in order to make correct decisions. As noted, attempts have been made to simplify this process by focusing on providing personnel with decision support and information via software. However, the human mind, even with the assistance of software, is not equipped to take into consideration all of the different variables, parameters, constraints, policies, and/or the like that are required to identify what resources should be utilized in performing a particular movement efficiently, as well as when the movement should be performed. This is especially true when personnel are required to perform this particular process in real time or near real time. That is to say, the human mind cannot conceivably perform, in real time or near real time, consideration and/or manipulation of the data for the different variables, parameters, constraints, policies, and/or the like that is required to identify what resources should be used in executing efficient movements of items, and when such movements should take place.

Accordingly, various embodiments of the disclosure provided herein address this technical challenge by providing an intelligent computing system that automates or nearly automates movements of items within a facility between various locations found throughout the facility, and/or that are associated with the facility. Specifically, various embodiments of the disclosure provide an intelligent computing system that automates identification of the optimal (e.g., highest value) movement of an item at a given time, and assigns the best (e.g., most efficient) resource to perform the optimal movement. Certain embodiments of the intelligent computing system can do so in virtually real time. Further, certain embodiments of the intelligent computing system provide interfaces to sources that submit requests for movements of items, provide assignments of movements to resources in real time, and/or provide capabilities for personnel to intervene in cases where there are exceptions.

As discussed further herein, the intelligent computing system in various embodiments leverages a combination of geographical data and detailed parameters, constraints, policies, and/or the like that are specific to a facility. The intelligent computing system may leverage the combination of geographical data, parameters, constraints, policies, and/or the like in determining the specific (e.g., optimal) resource assignments to movements. In particular embodiments, the intelligent computing system may do so in real time considering the current state of the facility and factors of the facility that can affect movements. For example, the intelligent computing system may consider the current state of the facility that involves the current locations of resources, the current locations of the items to be moved, the destinations of the items, the current time of day, and/or the like. In addition, the intelligent computing system may consider factors of the facility that can affect movements that involve obstacles that may be present in travel paths such as stop signs, walk paths, congestion points, and/or the like.

As a specific example, the intelligent computing system in particular embodiments obtains a set of requests that involve moving items between a plurality of locations at a facility and a priority for each request. In addition, the intelligent computing system obtains geographical data for the facility that includes at least one of a set of amounts of time or a set of distances involved in moving the items between the plurality of locations and a set of constraints on moving the items between the plurality of locations. Further, the intelligent computing system obtains state data for the facility that includes current locations of a plurality of resources available to execute the set of requests. In addition, the state data may include information on factors that may affect movements such as whether the facility (portion thereof) is currently experiencing congestion, a portion of the facility has been temporary closed down to an emergency, certain personnel is currently on break, and/or the like. Accordingly, the intelligent computing system then uses the geographical data and state data in generating a movement plan that identifies a specific resource to execute each request found in the set of requests.

For example, the intelligent computing system in particular embodiments generates a set of clusters based at least in part on the priority for each request. Here, the intelligent computing system may generate each cluster to include the requests from the set of requests with a same or similar priority. The intelligent computing system may then process each cluster by conducting iterations on the cluster to identify a specific resource for each request found in the cluster.

For example, the intelligent computing system may perform each iteration of a cluster by processing the requests remaining in the cluster that have yet to be assigned to a specific resource using a rules-based engine and/or a machine-learning model to identify a highest priority request from the requests. The intelligent computing system may then generate, based at least in part on the geographical data and the state data, at least one of an estimated amount of time or an estimated distance for each resource in the plurality of resources that is eligible to execute the highest priority request. The estimated amount of time or estimated distance concerns executing the highest priority request to move the item involved in the highest priority request from a first location to a second location at the facility. The intelligent computing system then identifies a specific resource to execute the highest priority request based at least in part on at least one of the estimated amount of time or the estimated distance for each resource that is eligible to execute the highest priority request. For example, the intelligent computing system may identify the resource with the shortest estimated amount of time or estimated distance to execute the highest priority request as the specific resource.

Upon generating the movement plan, the intelligent computing system may then generate assignments based at least in part on the movement plan. For example, the intelligent computing system may generate, based at least in part on the movement plan, at least one assignment for having the specific resource identified in the plan for a specific request execute the request. In addition, the intelligent computing system may communicate the assignment to initiate the specific resource executing the request to move the item from the first location to the second location. For example, the intelligent computing system may communication the assignment to the specific resource to inform the resource to execute the request. In addition, the intelligent computing system may provide other data along with the assignment such as, for example, the route that the resource should follow in executing the request.

Accordingly, the intelligent computing system's leveraging of a combination of geographical data and state data for the facility in various embodiments in determining the specific (e.g., optimal) resource assignments to movements can allow for coordinated movement of the items to different locations of the facility in a highly efficient manner. In addition, the intelligent computing system in various embodiments can perform such leveraging to facilitate highly efficient movements while managing the complexity of all the different variables, parameters, constraints, policies, and/or the like. Further, the intelligent computing system in various embodiments can perform such leveraging to facilitate highly efficient movements without manual involvement in most instances. Therefore, embodiments of the intelligent computing system can address the significant technical challenge many entities face in coordinating movements of items within a facility from different locations found throughout the facility, and/or are associated with the facility. Additional detail is now provided with respect to various aspects of different embodiments of the disclosure.

### Example Computing Environment

An example of a facility that requires coordinated movement of items between locations associated with the facility is now provided and is used throughout the remainder of this disclosure to assist the reader in understanding the disclosure. The example facility is a shipping and logistics hub used for sorting parcels. The hub includes one or more sorting buildings and multiple parking positions (which may also be referred to as bays) for parking trailers that are empty or holding parcels. Operation of the hub involves moving the trailers from the different parking positions to the one or more sorting buildings (e.g., bay doors thereof) so that parcels can be unloaded from and/or loaded into the trailers. In some instances, operation of the hub may involve moving other types of items in addition to, or instead, of trailers, such as rail cars used in transporting parcels. However, for purposes of this example, operation of the hub involves moving trailers.

Coordinating the movement of the trailers from the parking positions to the sorting buildings and vice versa is to be performed in an orchestrated manner to ensure that the trailers are in the right locations at the right time to enable timely unloading and loading of the trailers. For example, certain personnel may be assigned to a bay door of a sorting building who are tasked with unloading and loading parcels from trailers. An efficient operation of the hub would entail removing a trailer from the bay door essentially at the moment the personnel have completed unloading or loading the trailer, and immediately replacing the trailer with another trailer that needs to be unloaded or loaded. Such operation provides optimal use of the personnel with respect to them performing their intended task.

The hub includes a plurality of resources that are used in moving the trailers between parking positions and the sorting buildings. Such resources include equipment that is configured to physically move the trailers between the parking positions and the sorting buildings. For example, the equipment may include tractors configured to hook up to the trailers and haul the trailers between the parking positions and the sorting buildings. The tractors may include different types of tractors. For example, the hub may include a first type of tractor that is a traditional semi-tractor with side doors. In addition, the hub may include a second type of tractor that has a rear door to allow for an operator to step out the back of the tractor to hook up a trailer to the tractor, as opposed to having to exit via a side door. Such a configuration may allow for the operator to hook up a trailer more quickly than if the operator were using a traditional semi-tractor with side doors. Further, the hub may include a third type of tractor that is an autonomous tractor that operates without an operator to perform movements.

In addition, the resources for the hub include the personnel who operate the tractors, sometimes referred to shifters. Certain routes that may be taken in performing movements may require a licensed shifter. For example, certain routes may involve moving trailers to remote locations (e.g., lots, yards, etc.) that traverse public roads. Therefore, shifters who are not licensed to operate the tractors on these routes are considered to be restricted (constrained) with respect to which movements they can perform because certain movements will require a licensed shifter to traverse the routes needed for the movements. The same may be true of equipment in which certain tractors are licensed, while others are not.

The hub has a geographical configuration with different locations in the form of the different parking positions and sorting buildings. The parking positions may be spread across multiple lots, yards, and/or the like that are on premise or remote from the facility. The sorting buildings are designed with multiple bay doors in which the trailers can be backed into for unloading and/or loading of parcels. As noted, certain personnel may be assigned to the bay doors to unload and load trailers. The personnel are assigned to a schedule that plans the personnel's workday and includes scheduled breaks such as lunch breaks, rest breaks, bathroom breaks, and/or the like. Therefore, the personnel, or a portion thereof, are not available at certain times of the day.

The geographical configuration further defines routes that can be taken in moving the trailers between parking positions and the bay doors of the sorting buildings. A route may involve different aspects along the route. For example, the route may involve required stops such as stop signs, stop lights, cross walks, and/or the like that occur along the route. In addition, the route may involve certain requirements such as licensed operators and/or tractors to traverse the route, or certain restrictions such as weight restrictions. The route may involve other aspects that may be dynamic in nature. For example, the route may cross a walk path for a personnel parking lot that has a significant amount of foot traffic at various times of the day such as a shift change. These particular aspects may be viewed as constraints (e.g., penalties) in using the route because they potentially increase the amount of time and/or distance it takes for a tractor to traverse the route.

The same type of aspects may be applicable to the parking positions and/or bay doors of the sorting buildings. For example, a parking position may be restricted on the size of the trailer that can be stored at the position. While another parking position may be large enough to store multiple trailers of a certain size. Likewise, a bay door on a sorting building may be restricted as to the size of the trailer that may be backed into the bay door. These particular aspects may be viewed as constraints (e.g., penalties) or advantages (e.g., rewards) in using the locations because they potentially decrease or increase the options on the movements that can be performed involving the locations.

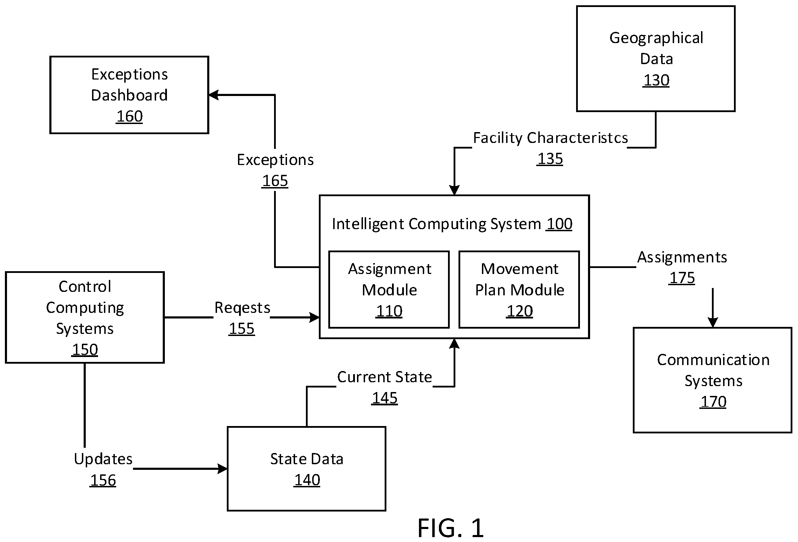

The complexity of managing all these different variables, parameters, constraints, policies, and/or the like to identify what combinations of shifter and tractor are required to efficiently perform movements of the trailers can prove to be a significant technical challenge. This is especially true when performed manually. Accordingly, FIG. 1 depicts an example of a computing environment that can be used for facilitating efficient movements of the trailers between the parking positions and bay doors of the sorting buildings according to various embodiments.

In various embodiments, an intelligent computing system 100 within the computing environment includes software components and/or hardware components for determining the specific (e.g., optimal) resource assignments to movements that allow for coordinated movements of the trailers to the different parking positions and bay doors in a highly efficient manner. Specifically, in various embodiments, the intelligent computing system 100 leverages a combination of geographical data 130 and state data 140 in determining the specific resource assignments to movements.

Upon initializing, the intelligent computing system 100 obtains the geographical data 130 that includes facility characteristics 135. In particular embodiments, the geographical data 130 represents a mapping of different characteristics associated with the geographical configuration of the facility as previously discussed. For example, the geographical data 130 may identify the parking positions and bay doors of the sorting buildings for the hub. In addition, the geographical data 130 may identify the different routes that exist between the parking positions and bay doors. Further, the geographical data 130 may identify the types of resources that are available for the hub. Furthermore, the geographical data 130 may identify the constraints and/or advantages associated with the different parking positions, bay doors, routes, resources, and/or the like.

In some embodiments, the geographical data 130 also includes parameters related to different characteristics of the hub. For example, the geographical data 130 may include a distance for segments (e.g., portions thereof) of each route and/or an amount of time (e.g., average amount of time) to traverse the segments for each route. In addition, the geographical data 130 may include an amount of time (e.g., average amount of time) for a shifter to hook up a trailer to a tractor, sorting times (e.g., average sorting times) for various volumes of parcels (e.g., various trailer sizes). Further, the geographical data 130 may include parameters on certain events at the facility that may affect certain routes such as congestion points at different times of the day, shift changes, reoccurring road closures, reoccurring rail movements, and/or the like.

In various embodiments, the intelligent computing system 100 obtains requests 155 for performing movements from one or more control computing systems 150. A request 155 involves performing a movement of a particular trailer to a particular parking position or bay door of a sorting building. The request 155 may include data associated with the movement such as, for example, the type of movement to be performed, the current location of the trailer involved in the movement, the location where the trailer is to be moved to, the type of resource required to perform the movement, and/or the like. The type of movement to be performed may involve, for example, inbound (unload parcels), outbound (load parcels), maintenance, and/or the like. In addition, the request 155 may include a priority for having the movement associated with the request 155 performed with respect to the movements associated with the other requests 155.

The one or more control computing systems 150 providing the requests 155 may include, for example, transportation management systems involved with scheduling shipment of parcels to other shipping and logistics hubs, service facilities, final delivery locations, and/or the like. In addition, the one or more control computing systems 150 may include sorting systems involved with controlling sorting of parcels at the hub, tracking systems involved with tracking parcels through the shipping process, and/or the like.

In particular embodiments, the intelligent computing system 100 generates one or more assignments 175 for the requests 155 received from the one or more control computing systems 150. The assignments 175 provide details on the movements that are to be performed as identified in the requests 155. For example, an assignment 175 may provide details identifying the trailer to be moved, the current location of the trailer, the location to move the trailer to, the route to take for performing the movement, and/or the like. In some embodiments, the intelligent computing system 100 performs this function by executing an assignment module 110.

The assignment module 110 generates the assignments 175 based at least in part on a specific resource identified for each request 155 as the best (e.g., most efficient) resource that is available to perform the movement associated with the request 155 from the resources that are available and can perform the movement. In particular embodiments, the assignment module 110 utilizes a movement plan that identifies the specific resources to execute the requests 155 in generating the assignments 175. Here, the assignment module 110 may execute a movement plan module 120 to generate the movement plan.

In various embodiments, the movement plan module 120 obtains state data 140 that includes the current state 145 of different variables that may affect the tractors performing movements of the trailers, as well as personnel loading and/or unloading the trailers. For example, the state data 140 may identify the current resources (e.g., the current shifters and tractors) that are available for performing movements of the trailers to the different parking positions and bay doors. In addition, the state data 140 may provide the current location of each resource. For example, each tractor may have a Global Positioning System (GPS) device that provides the current location of the tractor. Likewise, personnel (e.g., shifters and/or sorters) may carry devices having GPS capabilities that provide the current locations of the personnel. Further, the state data 140 may provide the current location of each trailer at the facility. Similarly, the trailers may be configured with GPS devices. Furthermore, the state data 140 may provide current conditions that are being experienced at the hub that may affect the tractors performing movements such as traffic congestion at a particular location of the hub, a breakdown of a tractor on a particular route, and/or the like.

Accordingly, one or more systems and/or repositories may be used in collecting and storing the state data 140. For example, one or more control computing systems 150 associated with the hub may collect the state data 140 for the hub and provide updates 156 of the state data 140. As a specific example, a control computing system 150 may collect the GPS coordinates of the different tractors, trailers, and/or personnel and provide the GPS coordinates as an update 156 to the state data 140. In another specific example, a control computing system 150 may be used in monitoring sorting machinery being used in a particular sorting building. Here, the control computing system 150 may provide starts and stops of the sorting machinery as an update 156 to the state data 140. The movement plan module 120 may use the update 156 in identify sorting personnel who may or may not be available, trailers that are currently being unloaded or loaded, trailers that have been unloaded or loaded, and/or the like.

In various embodiments, the movement plan module 120 identifies a specific resource for a request 155 by performing iterations on the requests 155 to identify a highest priority request 155 remaining in the requests 155 that have yet to be assigned a specific resource, and then identifying a best resource from the resources that are available and can perform the movement associated with the request 155. In some embodiments, the movement plan module 120 first generates a set of clusters for the requests 155. For example, the movement plan module 120 may generate each cluster in the set of clusters to include the requests 155 that have the same or similar priority. The movement plan module 120 then performs iterations on each of the clusters to identify a specific resource for each request found in the cluster.

More specifically, the movement plan module 120 may order the set of clusters based at least in part on the priorit(ies) associated with the clusters and process the set of clusters, starting with the "highest" priority cluster and ending with the "lowest" priority cluster. The movement plan module 120 may then perform iterations on each cluster to assign a specific resource to each request found in the cluster. For example, the movement plan module 120 may perform an iteration by initially identify the highest priority (optimal) request 155 from the requests 155 in the cluster that have yet to be assigned a specific resource. The movement plan module 120 may then identify the best resource from the resources that are available to execute the request 155 and are able to perform the movement associated with the request 155. As discussed further herein, the movement plan module 120 may utilize both the geographical data 130 and the state data 140 in identifying the best resource for the highest priority request 155.

Once, the movement plan module 120 has processed all the clusters for the set of clusters, the movement plan module generates the movement plan that identifies the specific resource to execute each request 155. By performing the iterations in various embodiments, the movement plan module 120 is able to generate a movement plan that identify specific resources for the requests 155 that allows for performing the movements associated with the requests in a highly efficient manner.

In turn, the assignment module 110 generates one or more assignments 175 for the requests 155 based at least in part on the movement plan. Here, the assignments 175 may identify the movement to be performed, as well as other data associated with the movement such as the location of the trailer to be moved, the location to move the trailer to, the route to take for the movement, and/or the like.

The assignment module 110 may then initiate sending the assignments 175 to the specific resources (e.g., shifters and/or tractors) to execute the requests 155 and perform the movements as detailed in the assignments 175. For example, the assignment module 110 may provide the intelligent computing system 100 with the assignments 175. In turn, the intelligent computing system 100 may generate an electronic communication for each assignment 175 and send the electronic communication to the specific resource. For example, the intelligent computing system 100 may generate the electronic communications for the assignments 175 and send the electronic communications via one or more communication systems 170 to the specific resources. As a specific example, the intelligent computing system 100 may send the electronic communications over one or more wireless networks to communication systems 170 found on the tractors and/or communication systems 170 in the form of mobile devices being used by shifters. Accordingly, the shifters and/or tractors, upon receiving the assignments 175, can perform the movements by moving the trailers to the identifies parking positions and/or bay doors as identified in the assignments 175.

In particular embodiments, the intelligent computing system 100 (e.g., the assignment module 110) may evaluate (reevaluate) the movement plan due to some change occurring for the hub. For example, the intelligent computing system 100 may evaluate the movement plan due to occurrence of a triggering event such as a certain amount of time elapsing since the movement plan was generated, a certain number of assignments being sent to resources, occurrence of another event such as a route or resource being made temporarily unavailable, and/or the like. The intelligent computing system 100 may perform this functionality to ensure that the movement plan reflects the current state at the hub and is providing assignments 175 to have the various resources (e.g., shifters and/or tractors) execute the requests 155 and perform the movements of the trailers in a highly efficient manner.

Finally, the intelligent computing system 100 may provide exceptions 165 that represent instances in which the intelligent computing system 100 is unable to identify a specific resource to execute a request 155. In some embodiments, the intelligent computing system 100 may provide the exceptions 165 through an exceptions dashboard 160 that is in the form of one or more graphical user interfaces (e.g., webpages of a website). An operator at the hub may then review the exceptions 165 using the dashboard 160 and assign a specific resource to the request 155. In some instances, the intelligent computing system 100 may provide one or more suggests of a specific resource to assign to the request 155 to aid the operator in identifying what resource should be assigned to the request 155.

Accordingly, various embodiments of the intelligent computing system 100 facilitate movements of the trailers at the hub so that execution of hub operations can be performed in a highly efficient manner. In addition, various embodiments of the intelligent computing system 100 facilitate the movements of the trailers in an automatic, or near automatic, fashion with minimal or no human involvement. That is to say, various embodiments of the intelligent computing system 100 address the significant technical challenges faced by the hub in conducting coordinated movements of trailers between the different parking positions and bay doors at the sorting buildings. Such capabilities can be essential for facilities such as a shipping and logistics hub that need to have an even flow of volume in and out of the facilities to effectively run their businesses. Further detail is now provided regarding the configuration and functionality of the assignment module 110 and the movement plan module 120 according to various embodiments.

### Assignment Module

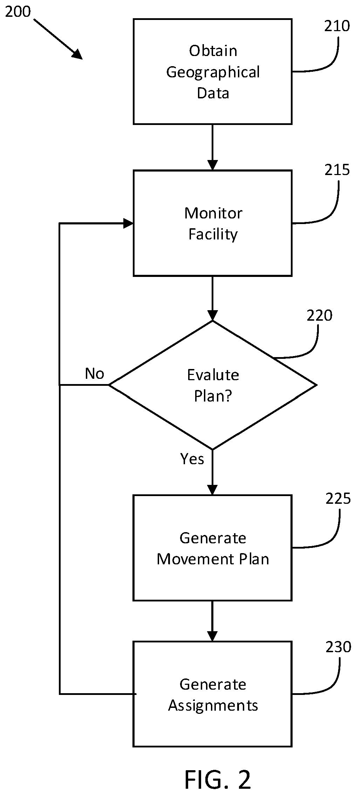

Turning now to FIG. 2, additional details are provided regarding an assignment module 110 used for generating assignments for having resources execute requests and perform movements of items in accordance with various embodiments. Accordingly, the flow diagram shown in FIG. 2 may correspond to operations carried out, for example, by computing hardware found in the intelligent computing system 100 as described herein, as the computing hardware executes the assignment module 110.

The process 200 involves the assignment module 110 obtaining geographical data 130 for the hub in Operation 210. For example, the assignment module 110 may obtain the geographical data 130 from some type of storage media such as a repository that is used in storing the geographical data 130. As previously discussed, the geographical data 130 may be constructed to provide a mapping of various facility characteristics 135 of the geographical configuration of the hub.

For example, the geographical data 130 may identify the parking positions and bay doors of the sorting buildings for the hub, the different routes (e.g., segments thereof) that exist between the parking positions and bay doors, the types of resources that are available for the hub, constraints and/or advantages associated with the different parking positions, bay doors, routes, resources, and/or the like. In addition, the geographical data 130 may identify parameters related to the different characteristics of the hub such as distances associated with segments of each route, amounts of time (e.g., average and/or median amounts of time) to traverse segments of each route, an amount of time (e.g., average and/or median amount of time) for a shifter to hook up a trailer to a tractor, sorting times (e.g., average and/or median sorting times), congestion points by time of day, certain events at the facility that may affect certain routes, and/or the like.

In some embodiments, the intelligent computing system 100 may provide a geographical data dashboard in the form of one or more graphical user interfaces that allows for personnel of the hub to manage the geographical data 130 for the hub. For example, a new walk path may be installed at the hub for personnel to walk between sorting buildings that crosses over several routes that can be taken in performing movements. In this example, personnel for the hub can use the geographical data dashboard in updating the geographical data for the hub to reflect the new walk path.

At Operation 215, the assignment module 110 monitors the facility. As previously discussed, a desire may exist to evaluate (reevaluate) a movement plan due to a triggering event occurring that may affect the assignments 175 of the specific resources to the requests 155 found in the movement plan. In other words, a desire may exist to evaluate (reevaluate) a movement plan due to a triggering event occurring that may cause a less than best (e.g., non-optimal) resource (e.g., shifter and/or tractor) to be assigned to a particular request. Such triggering events may include, for example, a certain amount of time elapsing since the movement plan was generated, a certain number of assignments having been sent to resources, occurrence of another event such as a route or resource being made temporarily unavailable, and/or the like. The evaluation (reevaluation) is performed to ensure that the movement plan reflects the current state at the hub and is providing assignments 175 to have the various resources (e.g., shifters and/or tractors) execute the requests 155 and perform the movements of the trailers in a highly efficient manner.

Therefore, in various embodiments, the assignment module 110 monitors for an occurrence of these triggering events. For example, the assignment module 110 may monitor a time that the movement plan (e.g., latest version thereof) was generated. Additionally, or alternatively, the assignment module 110 may monitor the number of assignments that have been sent out based at least in part on the movement plan (e.g., latest version thereof). Additionally, or alternatively, the assignment module 110 may monitor the state data 140 for the occurrence of other triggering events.

At Operation 220, the assignment module 110 determines whether a triggering event has occurred, and an evaluation of the movement plan should be conducted. If not, then the assignment module 110 returns to Operation 215 and continues to monitor for the occurrence of a triggering event. However, if the assignment module 110 determines that a triggering event has occurred, then the assignment module 110 generates a movement plan (e.g., new version thereof) in Operation 225.

In various embodiments, the assignment module 110 performs the operation of generating the movement plan by executing a movement plan module 120. In turn, the movement plan module 120 generates the movement plan considering the combination of the geographical data 130 and state data 140 for the hub. As a result, the movement plan module 120 in various embodiments generates a movement plan that identifies specific resources for executing requests 155 submitted for performing various movements of trailers for the hub so that the movements are performed in a coordinated and highly efficient manner.

At this point, the assignment module 110 generates one or more assignments 175 to send to the specific resources to execute the requests 155 based at least in part on the movement plan in Operation 230. As previously noted, each assignment 175 may identify the movement to be performed, as well as other data associated with the movement such as the location of the trailer to be moved, the location to move the trailer to, the route to take for the movement, and/or the like.

Accordingly, the assignment module 110 may then initiate sending the assignments 175 to the specific resources by providing the intelligent computing system 100 with the assignments 175. In turn, the intelligent computing system 100 may generate an electronic communication for each assignment 175 and send the electronic communication to the specific resource. As previously noted, the resources (e.g., shifters and/or tractors), upon receiving the assignments 175, can perform the movements by moving the trailers to the parking positions and/or bay doors as identified in the assignments 175.

In some instances, the assignments may involve resources that operate in an autonomous manner without human involvement (e.g., an autonomous tractor). Therefore, in these instances, the intelligent computing system 100 may generate electronic communications that provides specific instructions (e.g., commands) that facilitate operation of the autonomous resources to perform the movements. Once the assignment module 110 has generated the assignments, the assignment module 110 may return to Operation 215 to continue monitoring the facility for additional occurrences of triggering events.

It is noted that the assignment module 110 in particular embodiments may determine that the movement plan may not identify a specific resource for a particular request. This may be case because the movement plan module 120 was unable to identify a specific resource for the request. For example, the request may involve a movement of a trailer from a parking position that is remote from the hub and requires a licensed resource (e.g., a licensed shifter and/or tractor) that the movement plan module 120 was unable to identify from the resources that are currently available at the hub. In this instance (although not shown in FIG. 2), the assignment module 110 may generate an exception for the request that is communicated to personnel at the hub through an exceptions dashboard 160.

The personnel may then view the exception through the exceptions dashboard 160 and address the exception accordingly. For example, the personnel may contact a dispatch to have a licensed resource be made available to execute the request and perform the movement. The personnel may then have the licensed resource identified in the movement plan through the dashboard 160 as the specific resource to execute the request.

### Movement Plan Module

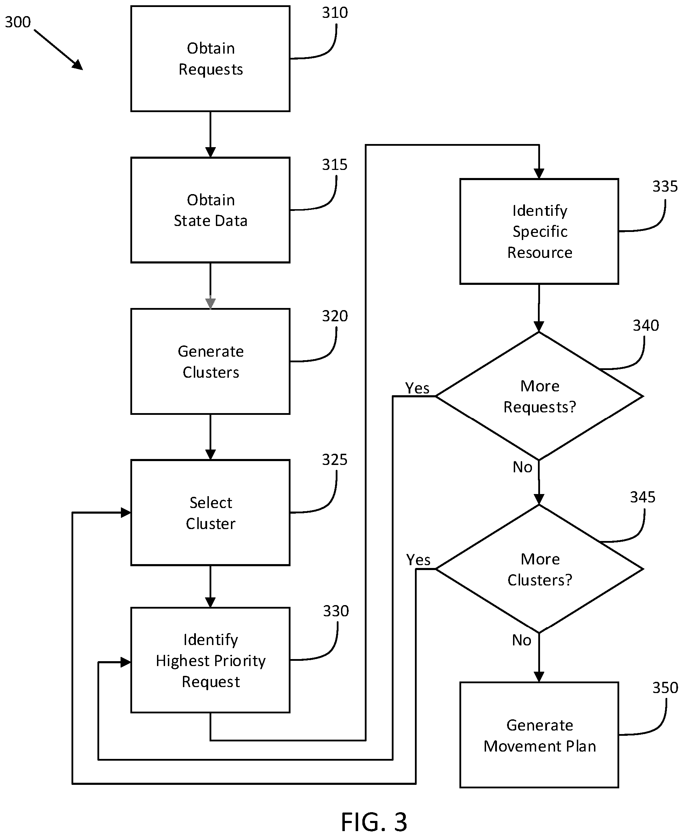

Turning now to FIG. 3, additional details are provided regarding a movement plan module 120 used for generating a movement plan in accordance with various embodiments. Accordingly, the flow diagram shown in FIG. 3 may correspond to operations carried out, for example, by computing hardware found in the intelligent computing system 100 as described herein, as the computing hardware executes the movement plan module 120.

The process 300 involves the movement plan module 120 obtaining requests 155 for performing movements of trailers in Operation 310. As previously noted, one or more control computing systems 150 may provide the requests 155 to the intelligent computing system 100. In some embodiments, the one or more control computing systems 150 and/or the intelligent computing system 100 may store the requests 155 to make them available to the movement plan module 120. For example, the one or more control computing systems 150 and/or the intelligent computing system 100 may store the requests 155 along with the state data 140 so that the requests 155 are available to the movement plan module 120. In alternative embodiments, the one or more control computing systems 150 and/or the intelligent computing system 100 may store the requests 155 separately from the state data 140, such as in a different repository.

A request 155 provides data on the movement that is requested to be performed. For example, the request 155 may provide data identifying the trailer to be moved, the current location of the trailer, the location to where the trailer is to be moved, the type of resource required to perform the movement, a segment (e.g., portion thereof) of a route that is to be taken in performing the movement, and/or the like. In some embodiments, the movement plan module 120 may obtain data on the request 155 that is independent of the data provided by the request 155. For example, the movement plan module 120 may obtain the location of the trailer through GPS data collected from a GPS device placed on the trailer. In addition, the movement plan module 120 may obtain one or more segments of the route that is to be taken in performing the movement based at least in part on the geographical data 130 for the hub.

In various embodiments, the request also provides data identifying the type of movement that is requesting to be performed. For example, the type of movement may involve an "inbound" movement of a trailer to unload parcels from the trailer. The type of movement may involve an "outbound" movement of a trailer to load parcels into the trailer. The type of movement may involve a movement of a trailer that does not entail unloading or loading parcels such as, for example, moving the trailer to a location for maintenance.

In various embodiments, the request also provides data identifying a priority for the request 155. For example, the request 155 may provide a priority in the form of a numeric, text, alphanumeric, and/or the like. As a specific example, the request 155 may provide the priority as a numeric between one and nine, with one having a top (highest) priority and nine have a bottom (lowest) priority. The priority identifies an importance of having the movement associated with the request 155 performed, in relation to having the movements associated with the other requests 155 performed.

In some embodiments, the movement plan module 120 may instead generate a priority for a request 155. For example, the movement plan module 120 may generate a priority for a request 155 based at least in part on one or more characteristics of the movement associated with the request 155 such as the type of movement to be performed, the type or size of the trailer involved in the movement, the volume of parcels involved in the movement, the distance involved in the movement, and/or the like.

At Operation 315, the movement plan module obtains the state data 140 for the hub. The state data 140 represents the current state of different variables that may affect the shifters and/or tractors performing movements of the trailers, as well as personnel loading and/or unloading of the trailers. As previously noted, the state data 140 may identify, for example, the current resources (e.g., the current shifters and tractors) that are available for performing movements of the trailers to the different parking positions and bay doors, the current location of each resource, the current location of each trailer, current conditions that are being experienced at the hub such as traffic congestion, and/or the like.

At Operation 320, the movement plan module 120 generates a set of clusters from the requests 155. In various embodiments, the movement plan module 120 performs this particular operation by grouping the requests 155 having a same or similar priority into a cluster. For example, the movement plan module 120 may group all the requests 155 having a zero priority into a first cluster, all the requests 155 having a one priority into a second cluster, all the requests 155 having a two priority into a third cluster, and so forth.

In additional or alternative embodiments, the movement plan module 120 may group the requests 155 into the set of clusters using other criteria. For example, the movement plan module 120 may group all the requests 155 that involve inbound movements into a first cluster, all the requests 155 that involve outbound movements into a second cluster, and so forth. In another example, the movement plan module 120 may group all the requests 155 having a priority of zero and involve inbound movements into a first cluster, all the requests 155 having a priority of zero and involve outbound movements into a second cluster, and so forth. Yet in another example, the movement plan module 120 may group all the requests 155 having a priority of zero or one into a first cluster, all of the requests 155 having a priority of two or three into a second cluster, and so forth.

At Operation 325, the movement plan module 120 selects a cluster from the set of clusters. In various embodiments, the movement plan module 120 selects the cluster using criteria such as the priority associated with the cluster, the type of requests and/or movements associated with the cluster, the destinations (e.g., sorting building) associated with the cluster, and/or the like. Generally, the movement plan module 120 uses criteria that involves selecting the clusters in an order that facilitates generating a movement plan identifying specific resources to execute the requests in a coordinated manner that results in the movements being carried out in a highly efficient manner. For example, the movement plan module 120 may select the clusters from the set of clusters according to the priority associated with each of the clusters, thus selecting the highest priority cluster first, the second highest priority cluster second, the third highest priority cluster third, and so forth.

Once the movement plan module 120 selects a cluster, the movement plan module 120 identifies a highest priority request 155 from the requests 155 found in the cluster in Operation 330. Here, "highest priority" represents the request 155 remaining in the cluster that has yet to have a specific resource assigned to the request 155 and involves a movement that is consider the most or more important to perform with respect to the movements associated with the other requests 155 remaining in the cluster that have yet to have specific resources assigned to the requests 155.

In various embodiments, the movement plan module 120 utilizes some type of selection engine in identifying the highest priority request 155. In some embodiments, the selection engine is a rules-based model configured to apply a set of rules to the requests 155 remaining in the cluster that have yet to have specific resources assigned to the requests 155. Here, the movement plan module 120 processes the requests 155 using the rules-based model to apply the set of rules to each of the requests in identifying the highest priority request 155. For example, the set of rules may consider one or more characteristics of the request 155 and/or movement associated with the request 155 such as type of movement to be performed (e.g., inbound, outbound, maintenance, etc.), type of trailer involved in the movement (e.g., long trailer, short trailer, double trailer, etc.), volume of parcels to be sorted, distance to travel involved in the movement, destination of the trailer (e.g., sorting building one, sorting building two, maintenance bay, etc.), current location of the trailer (e.g., at a parking position, at a bay door needing to be pulled, at a maintenance bay, etc.), and/or the like.

In additional or alternative embodiments, the selection engine is a machine-learning model that is configured to process the requests 155 remaining in the cluster that have yet to have specific resources assigned to the requests 155 to generate output used in identifying the highest priority request 155. For example, the movement plan module 120 may process one or more characteristics of a request 155 and/or the movement associated with the request 155 using the machine-learning model to generate a representation (e.g., prediction) of the priority/importance of having the movement associated with the request 155 performed.

The machine-learning model may be any one of various types of machine-learning models and/or combination thereof, such as a neural network, support vector machine, logistic regression model, and/or the like. In addition, the machine-learning model may be trained using historical characteristic data on past movements that have been performed and their identified priority/importance of having those movements performed. Therefore, the movement plan module 120 may process each of the requests 155 that has yet to have specific resources assigned to the requests 155 using the machine-learning model to generate the representation of the priority/importance of having the movement associated with the request 155 performed. For example, the machine-learning model may provide the representation in the form of a value between zero and one, with zero being the least priority/importance and one being the most priority/importance. The movement plan module 120 may then use the representation generated for each request 155 in identifying the highest priority request 155. For example, the movement plan module 120 may select the request with the representation having the highest priority/importance (e.g., the highest value) as the highest priority request 155.

In additional or alternative embodiments, the movement plan module 120 may use a selection engine that is a combination of a rules-based model and a machine-learning model. For example, the selection engine may involve the movement plan module 120 first processing one or more characteristics of each of the requests 155 that has yet to have specific resources assigned to the requests 155 using the machine-learning model to generate a representation of the priority/importance for each request 155 and then processing the representation (e.g., along with one or more other characteristics) of each of the requests 155 using the rules-based model to identify the highest priority request 155.

At Operation 335, the movement plan module 120 identifies the specific resource to be assigned to the highest priority request 155. In various embodiments, the movement plan module 120 performs this operation by using some type of criteria in identifying the specific resource from the resources that are eligible to perform (e.g., that are available and can perform) the movement associated with the highest priority request 155.

For example, the movement plan module 120 in some embodiments uses an estimated amount of time for performing the movement as the criteria in identifying the specific resource to assign to the highest priority request. Here, the movement plan module 120 may use the geographical data 130 and the state data 140 in generating the estimated amount of time for performing the movement associated with the highest priority request 155 for each resource (e.g., each combination of shifter and tractor) that is available and can perform the movement.

More specifically, the movement plan module 120 may initially use a combination of the geographical data 130 and the state data 140 in identifying the resources that are eligible to perform the movement associated with the highest priority request 155. For example, the movement plan module 120 may identify what resources are currently available and operating at the facility (e.g., hub) by using the state data 140. The movement plan module 120 may then identify whether any of the available resources may have a constraint that keeps the resource from being able to perform the movement. For example, a portion of the movement may involve traversing a public roadway that requires the shifter to have a certain type of license to operate the tractor on the roadway. Therefore, the movement plan module 120 may identify any of the resources (e.g., combinations of shifter and tractor) in which the shifter is not licensed to operate the tractor on the roadway and eliminate those resources as eligible to perform the movement associated with the highest priority request 155.

Once the movement plan module 120 has identified the eligible resources, the movement plan module 120 may use the state data 140 in identifying the current location of an eligible resource. The movement plan module 120 may then use the geographical data 130 in identifying one or more routes that the eligible resource can take in performing the movement, as well as amounts of time (e.g., average, median, mode, etc.) required to perform segments (e.g., portions of a route) of each of the routes (e.g., traverse the route and complete the movement of the trailer).

The movement plan module 120 then generates an estimated amount of time for each route that concerns the resource performing the movement associated with the highest priority request 155 via the route. For example, the movement plan module 120 may generate the estimated amount of time by adding together the amounts of time for the segments that make up the route and then adjusting the estimated amount of time for a route based at least in part on one or more factors that can affect the resource traversing the route and completing performance of the movement. Once the movement plan module 120 has generated an estimated amount of time for each route, the movement plan module 120 may then select the route with the shorted estimated amount of time for performing the movement for purposes of considering whether to assign the resource to the highest priority request 155.

Accordingly, the movement plan module 120 may adjust the estimated amount of time needed to traverse a route based at least part on one or more constraints that may be applicable to the route at the time the movement is to be performed. For example, the route may include a cross walk that is used by personnel during a shift change that occurs at a certain time of day. Therefore, the movement plan module 120 may determine that the certain time of day is applicable to the movement to be performed for the highest priority request 155 and may adjust the estimated amount of time accordingly.

In addition, the movement plan module 120 may adjust the estimated amount of time based at least in part on other factors that may affect the estimated amount of time needed for the resource to traverse the route. For example, the movement plan module 120 may evaluate the type of equipment (e.g., semi-tractor with side doors or tractor having rear door) being used in performing the movement in adjusting the estimated amount of time. In another example, the state data 140 may also include data on actual amounts of time used by various resources (e.g., shifters and/or tractors) in performing movements that had been assigned and carried out by the resources. Accordingly, the movement plan module 120 may take these amounts of time into consideration when adjusting the estimated amount of time for a resource to traverse a particular route.

For example, the movement plan module 120 may compare the actual amounts of time taken by a particular resource in performing one or more movements with the estimated amounts of time that were generated for the resource to perform the movements. The movement plan module 120 may then apply an adjustment (e.g., a compliment or penalty) to the resource's estimated amount of time to perform the movement associated with the highest priority request 155 in evaluating whether to assign the resource as the specific resource to the request 155.

As a specific example, the movement plan module 120 may determine that the resource takes an average of twelve minutes to traverse a certain route in moving a trailer from a first location (e.g., a particular parking position) to a second location (e.g., a particular bay door on a sorting building). The average estimated amount of time for the resource to perform such movements is ten minutes. Therefore, the movement plan module 120 may adjust (e.g., penalize) the resource's estimated amount of time by adding two minutes for performing the movement over the same route that is associated with the highest priority request 155. Likewise, if the average estimated amount of time for the resource to perform such movements is fourteen minutes instead of twelve, then the movement plan module 120 may adjust (e.g., compliment) the resource's estimated amount of time by subtracting two minutes for performing the movement over the same route that is associated with the highest priority request 155.

Once the movement plan module 120 has generated an estimated amount of time for eligible resource performing the movement associated with the highest priority request 155, the movement plan module 120 identifies the specific resource to assign to the highest priority request 155 in Operation 335. In various embodiments, the movement plan module 120 identifies the specific resource by selecting the resource that is the best (optimal) option from the resources that are eligible to perform the movement associated with the highest priority request 155. For example, the movement plan module 120 may select the resource from the eligible resources that has the shortest estimated amount of time for performing the movement.

In particular embodiments, the movement plan module 120 may use "tie breaker" criteria in instances where multiple resources may have the shortest estimated amount of time. For example, the movement plan module 120 may evaluate one or more characteristics of the resources with the shortest estimated amount of time in selecting the specific resource. Such criteria may include, for example, the resource that historically has better performance in meeting estimated amounts of time, the resource that has to traverse the shorter route to perform the movement (and therefore, consume less fuel), and/or the like.

In additional or alternative embodiments, the movement plan module 120 may determine instances where a specific resource cannot be identified to assign to the highest priority request 155. For example, the highest priority request 155 may have a constraint where a certain type of resource is required to perform the movement associated with the highest priority request 155. However, the movement plan module 120 may be unable to identify any available resources that are of the certain type of resource. In these instances, the movement plan module 120 may identify such requests 155 as exceptions in the movement plan.

Additionally, or alternatively, the movement plan module 120 may determine instances where a more efficient type of resource is not available to assign to the highest priority request 155. For example, the movement involved with the highest priority request 155 may be performed via a first route that traverses a public road and requires a licensed shifter or a second route that does not traverse a public road and therefore, does not require a licensed shifter. The first route may require a lesser amount of time to traverse than the second route. However, the resources that are eligible to perform the movement may not include any shifters who are licensed. Therefore, the movement plan module 120 may determine that although a resource may be available to assign to the highest priority request 155, a more efficient resource could have been assigned to the highest priority request 155. Again, the movement plan module 120 may identify such requests 155 as exceptions in the movement plan. Accordingly, identifying these exceptions may allow for personnel to better schedule resources to promote higher efficiency.

In additional or alternative embodiments, the movement plan module 120 may use other metrics in identifying the specific resource to assign to the highest priority request 155. For example, the movement plan module 120 may use the shortest distance needed to be traveled to perform the movement as the metric to identify the specific resource to assign to the highest priority request 155. For example, the entity (e.g., the shipping and logistics hub) may consider highly efficient operation of the hub to be an operation that consumes a minimum amount of fuel in addition to, instead of, an operation that performs the needed movements in the least amount of time.

At Operation 340, the movement plan module 120 determines whether more requests 155 remain in the cluster that need to have a specific resource assigned to the requests 155. If so, then the movement plan module 120 returns to Operation 330 to identify the highest priority request 155 from the requests 155 that remain, and performs the operations discussed herein to identify a specific resource to assign to the highest priority request 155.

Once the movement plan module 120 has processed all of the requests 155 found in the cluster, the movement plan module determines whether more clusters remain that need to be evaluated in Operation 345. If so, then the movement plan module 120 returns to Operation 325 and selects the next cluster found in the set of clusters. The movement plan module 120 then performs the operations discussed herein in processing each of the requests 155 found in the cluster to assign a specific resource to each of the requests 155.

Once the movement plan module 120 has processed all of the clusters, the movement plan module 120 generates a movement plan in Operation 350. Accordingly, the movement plan module 120 generates a movement plan that identifies the specific resource assigned to each of the requests 155. The movement plan module 120 may then provide the movement plan to the assignment module 110 as previously discussed.

### Example Technical Platforms

Embodiments of the present disclosure may be implemented in various ways, including as computer program products that comprise articles of manufacture. Such computer program products may include one or more software components including, for example, software objects, methods, data structures, and/or the like. A software component may be coded in any of a variety of programming languages. An illustrative programming language may be a lower-level programming language such as an assembly language associated with a particular hardware architecture and/or operating system platform. A software component comprising assembly language instructions may require conversion into executable machine code by an assembler prior to execution by the hardware architecture and/or platform. Another example programming language may be a higher-level programming language that may be portable across multiple architectures. A software component comprising higher-level programming language instructions may require conversion to an intermediate representation by an interpreter or a compiler prior to execution.

Other examples of programming languages include, but are not limited to, a macro language, a shell or command language, a job control language, a script language, a database query, or search language, and/or a report writing language. In one or more example embodiments, a software component comprising instructions in one of the foregoing examples of programming languages may be executed directly by an operating system or other software component without having to be first transformed into another form. A software component may be stored as a file or other data storage construct. Software components of a similar type or functionally related may be stored together such as, for example, in a particular directory, folder, or library. Software components may be static (e.g., pre-established, or fixed) or dynamic (e.g., created or modified at the time of execution).

A computer program product may include a computer-readable storage medium storing applications, programs, program modules, scripts, source code, program code, object code, byte code, compiled code, interpreted code, machine code, executable instructions, and/or the like (also referred to herein as executable instructions, instructions for execution, computer program products, program code, and/or similar terms used herein interchangeably). Such computer-readable storage media include all computer-readable media (including volatile and non-volatile media). A computer program product does not include a transitory medium.

In some embodiments, a non-volatile computer-readable storage medium may include a floppy disk, flexible disk, hard disk, solid-state storage (SSS) (e.g., a solid-state drive (SSD), solid state card (SSC), solid state module (SSM)), enterprise flash drive, magnetic tape, or any other non-transitory magnetic medium, and/or the like. A non-volatile computer-readable storage medium may also include a punch card, paper tape, optical mark sheet (or any other physical medium with patterns of holes or other optically recognizable indicia), compact disc read only memory (CD-ROM), compact disc-rewritable (CD-RW), digital versatile disc (DVD), Blu-ray disc (BD), any other non-transitory optical medium, and/or the like. Such a non-volatile computer-readable storage medium may also include read-only memory (ROM), programmable read-only memory (PROM), erasable programmable read-only memory (EPROM), electrically erasable programmable read-only memory (EEPROM), flash memory (e.g., Serial, NAND, NOR, and/or the like), multimedia memory cards (MMC), secure digital (SD) memory cards, SmartMedia cards, CompactFlash (CF) cards, Memory Sticks, and/or the like. Further, a non-volatile computer-readable storage medium may also include conductive-bridging random access memory (CBRAM), phase-change random access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random access memory (FJG RAM), Millipede memory, racetrack memory, and/or the like.

In some embodiments, a volatile computer-readable storage medium may include random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory module (RIMM), dual in-line memory module (DIMM), single in-line memory module (SIMM), video random access memory (VRAM), cache memory (including various levels), flash memory, register memory, and/or the like. It will be appreciated that where various embodiments are described to use a computer-readable storage medium, other types of computer-readable storage media may be substituted for or used in addition to the computer-readable storage media described above.

Various embodiments of the present disclosure may also be implemented as methods, apparatuses, systems, computing devices, computing entities, and/or the like. As such, various embodiments of the present disclosure may take the form of a data structure, apparatus, system, computing device, computing entity, and/or the like executing instructions stored on a computer-readable storage medium to perform certain steps or operations. Thus, various embodiments of the present disclosure also may take the form of entirely hardware, entirely computer program product, and/or a combination of computer program product and hardware performing certain steps or operations.

Various embodiments of the present disclosure are described herein with reference to block diagrams and flowchart illustrations. Thus, each block of the block diagrams and flowchart illustrations may be implemented in the form of a computer program product, an entirely hardware embodiments, a combination of hardware and computer program products, and/or apparatuses, systems, computing devices, computing entities, and/or the like carrying out instructions, operations, steps, and similar words used interchangeably (e.g., the executable instructions, instructions for execution, program code, and/or the like) on a computer-readable storage medium for execution. For example, retrieval, loading, and execution of code may be performed sequentially such that one instruction is retrieved, loaded, and executed at a time. In some examples of embodiments, retrieval, loading, and/or execution may be performed in parallel such that multiple instructions are retrieved, loaded, and/or executed together. Thus, such embodiments can produce specially configured machines performing the steps or operations specified in the block diagrams and flowchart illustrations. Accordingly, the block diagrams and flowchart illustrations support various combinations of embodiments for performing the specified instructions, operations, or steps.

### Example System Architecture

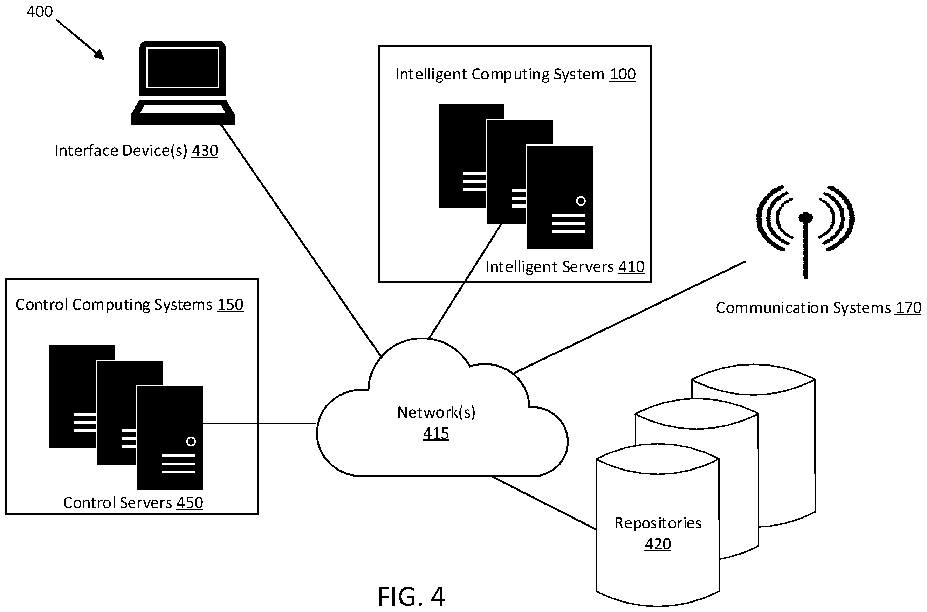

FIG. 4 is a block diagram of a system architecture 400 that can be used in coordinating movements of items between locations associated with a facility according to various embodiments of the disclosure as detailed herein. As may be understood from FIG. 4, the system architecture 400 may include the intelligent computing system 100 that comprises one or more intelligent servers 410. The intelligent server(s) 410 may be in communication over one or more networks 415 with one or more data repositories 420.

For example, the data repositor(ies) 420 may be used in storing geographical data 130 and/or state data 140 as detailed herein. In addition, the data repositor(ies) 420 may be used in storing one or more machine-learning models, one or more rules-based models, and/or various sets of rules that can be used by the rules-based model(s) as detailed herein. Although the intelligent server(s) 410 and repositor(ies) 420 are shown as separate components, these components 410, 420, in various embodiments, may comprise a single server and/or repository, a plurality of servers and/or repositories, one or more cloud-based servers and/or repositories, or any other suitable configuration.

The system architecture 400 may also include one or more control computing systems 150 that comprise one or more control servers 450. The control server(s) 450 may submit requests 155 as detailed herein over the network(s) 415 to have various movements performed. In some embodiments, the control server(s) 450 may communicate the requests 155 directly to the intelligent server(s) 410. In additional or alternative embodiments, the control server(s) 450 may communicate the requests 155 to the repositor(ies) 420, from which the intelligent server(s) 410 may obtain the requests 155. Further, the control server(s) 450 may communicate state data 140 to the repositor(ies) 420, from which the intelligent server(s) 410 may obtain the state data 140. Likewise, the intelligent server(s) may obtain the geographical data 130 from the repositor(ies) 420.

As previously noted, the intelligent computing system 100 may provide an exceptions dashboard 160 that is available over the network(s) 415 to allow personnel to handle exceptions. Here, personnel may access the dashboard 160 via one or more interface devices 430. For example, the intelligent computing system 100 may provide the dashboard as an interface such as a website that is accessible to the interface device(s) 430 over the network(s) 415.

According, the intelligent server(s) 410 may execute an assignment module 110 and a movement plan module 120 as described herein. Further, the intelligent server(s) 410 may provide one or more interfaces that allow the intelligent computing system 100 to communicate with the control computing systems 150 such as one or more suitable application programming interfaces (APIs), direct connections, and/or the like. Similarly, the intelligent server(s) 410 may provide one or more interfaces that allow the intelligent computing system 100 to communication to one or more communication systems 170 to facilitate sending assignments to resources for performing movements.

### Example Computing Hardware

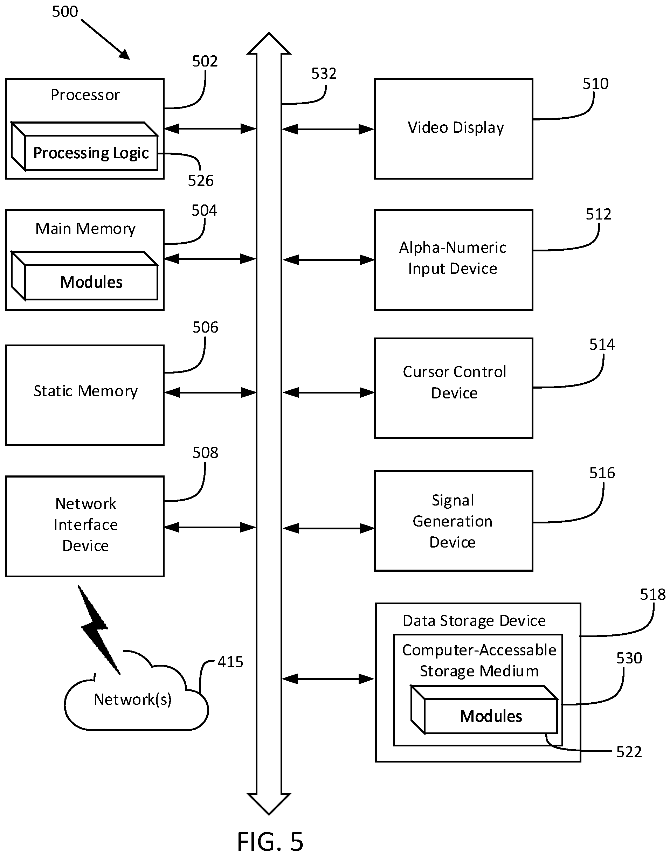

FIG. 5 illustrates a diagrammatic representation of computing hardware 500 that can be used within the system architecture 400. For example, the computing hardware 500 may be an intelligent server 410, a control server 450, and/or an interface device 430, as described in FIG. 4. In particular embodiments, the computing hardware 500 may be suitable for use as a computer within the context of the system architecture 400 that is configured to facilitate coordinating movements of items between locations associated with a facility.

In various embodiments, the computing hardware 500 may be connected (e.g., networked) to other computing hardware in a LAN, an intranet, an extranet, and/or the Internet. The computing hardware 500 may operate in the capacity of a server, a client computer in a client-server network environment, a peer computer in a peer-to-peer (or distributed) network environment, and/or the like. The computing hardware 500 may be, for example, a desktop personal computer (PC), a tablet PC, a set-top box (STB), a Personal Digital Assistant (PDA), a cellular telephone, a web appliance, a server, a network router, a switch or bridge, or any other computing hardware capable of executing a set of instructions (sequential or otherwise) that specify actions to be taken by the computing hardware. Further, while the computing hardware 500 is shown as a single computing entity in FIG. 5, the term "computing hardware" shall also be taken to include any collection of computing entities that individually or jointly execute a set (or multiple sets) of instructions to perform any one or more of the methodologies discussed herein.

The computing hardware 500 includes a processing device 502, a main memory 504 (e.g., read-only memory (ROM), flash memory, dynamic random access memory (DRAM) such as synchronous DRAM (SDRAM) or Rambus DRAM (RDRAM), etc.), a static memory 506 (e.g., flash memory, static random access memory (SRAM), etc.), and a data storage device518, which communicate with each other via a bus 532.

The processing device 502 represents one or more general-purpose processing devices such as a microprocessor, a central processing unit, and/or the like. More particularly, the processing device 502 may be a complex instruction set computing (CISC) microprocessor, reduced instruction set computing (RISC) microprocessor, very long instruction word (VLIW) microprocessor, or processor implementing other instruction sets, or processors implementing a combination of instruction sets. The processing device 502 may also be one or more special-purpose processing devices such as an application specific integrated circuit (ASIC), a field programmable gate array (FPGA), a digital signal processor (DSP), network processor, or the like. The processing device 502 may be configured to execute processing logic 526 for performing various operations, steps, and/or the like as discussed herein.

The computing hardware 500 may further include a network interface device 508. The computing hardware 500 also may include a video display unit 510 (e.g., a liquid crystal display (LCD) or a cathode ray tube (CRT)), an alphanumeric input device 512 (e.g., a keyboard), a cursor control device 514 (e.g., a mouse), and a signal generation device 516 (e.g., a speaker).

The data storage device 518 may include a non-transitory computer-accessible storage medium 530 (also known as a non-transitory computer-readable storage medium or a non-transitory computer-readable medium) on which is stored one or more modules 522 (e.g., one or more sets of instructions in the form of software) such as the assignment module 110 and movement plan module 120 as described herein. The modules 522 may also reside, completely or at least partially, within the main memory 504 and/or within the processing device 502 during execution thereof by the computing hardware 500. In this capacity, the main memory 504 and the processing device 502 can also constitute computer-accessible storage media. The modules 522 may further be transmitted or received over one or more networks 415 via a network interface device 508.

While the computer-accessible storage medium 530 is shown in FIG. 5 to be a single medium, the term "computer-accessible storage medium" should be understood to include a single medium or multiple media (e.g., a centralized or distributed database, and/or associated caches and servers) that store the one or more sets of instructions. The term "computer-accessible storage medium" should also be understood to include any medium that is capable of storing, encoding or carrying a set of instructions for execution by the computing hardware 500 and that cause the computing hardware 500 to perform any one or more of the methodologies of the present disclosure. The term "computer-accessible storage medium" should accordingly be understood to include, but not be limited to, solid-state memories, optical and magnetic media, etc.

### System Operation

The logical operations described herein may be implemented (1) as a sequence of computer implemented acts or one or more program modules running on a computing system and/or (2) as interconnected machine logic circuits or circuit modules within the computing system. The implementation is a matter of choice dependent on the performance and other requirements of the computing system. Accordingly, the logical operations described herein are referred to variously as states, operations, steps, structural devices, acts, or modules. These states, operations, steps, structural devices, acts, and modules may be implemented in software, in firmware, in special purpose digital logic, and any combination thereof. Greater or fewer operations may be performed than shown in the figures and described herein. These operations also may be performed in a different order than those described herein.

Embodiment 1: A method comprising: obtaining, by computing hardware, (1) a set of requests that involve moving items between a plurality of locations found at a facility and (2) a priority for each request of the set of requests; obtaining, by the computing hardware, geographical data for the facility, wherein the geographical data comprises at least one of a set of amounts of time or a set of distances involved in moving the items between the plurality of locations and a set of constraints on moving the items between the plurality of locations; obtaining, by the computing hardware, state data for the facility, wherein the state data comprises current locations of a plurality of resources available to execute the set of requests; generating, by the computing hardware, a movement plan that identifies a specific resource from the plurality of resources to execute each request found in the set of requests by: generating, based at least in part on the priority, a set of clusters, wherein each cluster of the set of clusters comprises the requests from the set of requests with the priority being same or similar; and processing, by the computing hardware, each cluster of the set of clusters by conducting iterations on the cluster, wherein each iteration involves: processing the requests remaining in the cluster that have yet to be assigned the specific resource using a rules-based engine to identify a highest priority request from the request remaining in the cluster that have yet to be assigned the specific resource; generating, based at least in part on the geographical data and the state data, at least one of an estimated amount of time or an estimated distance for each resource in the plurality of resources that is eligible to execute the highest priority request, wherein the estimated amount of time or the estimated distance concerns executing the highest priority request to move the item involved in the highest priority request from a first location of the plurality of locations to a second location of the plurality of locations; and identifying, based at least in part on at least one of the estimated amount of time or the estimated distance for each resource in the plurality of resources that is eligible to execute the highest priority request, the specific resource to execute the highest priority request; generating, by the computing hardware and based at least in part on the movement plan, at least one assignment for having the specific resource identified for at least one request in the set of requests execute the at least one request; and communicating, by the computing hardware, the at least one assignment to initiate the specific resource executing the at least one request to move the item from the first location to the second location.

Embodiment 2: The method of embodiment 1, wherein communicating the assignment involves sending an electronic communication over a wireless network to the specific resource.

Embodiment 3: The method of embodiment 1 or 2, wherein the specific resource is autonomous equipment, and communicating the assignment involves sending an electronic instruction to the autonomous equipment to have the autonomous equipment move the item from the first location to the second location without human intervention.

Embodiment 4: The method of any of embodiments 1 to 3, wherein the specific resource has at least one of the estimated amount of time or the estimated distance that is shorter than at least one of the estimated amount of time or the estimated distance for each other resource in the plurality of resources that is eligible to execute the highest priority request.

Embodiment 5: The method of any of embodiments 1 to 4, wherein the set of constraints identifies each of the plurality of resources that is eligible to execute the highest priority request.

Embodiment 6: The method of embodiment 5, wherein the plurality of resources comprises equipment configured to haul the items between the plurality of locations, and the set of constraints identifies each of the plurality of resources that is eligible to execute the highest priority request as able to at least one of travel to or have a certain capability needed for at least one of the first location or the second location.

Embodiment 7: The method of embodiment 5, wherein the plurality of resources comprises personnel operating equipment configured to haul the items between the plurality of locations, and the set of constraints identifies each of the plurality of resources that is eligible to execute the highest priority request as licensed to travel to at least one of the first location or the second location.

Embodiment 8: The method of any of embodiments 1 to 7, wherein at least one constraint of the set of constraints is based at least in part on a time of day.

Embodiment 9: A system comprising: a computer-readable medium storing instructions; and a processing device communicatively coupled to the computer-readable medium, wherein, the processing device is configured to execute the instructions and thereby perform operations comprising: obtaining (1) a set of requests that involve moving items between a plurality of locations found at a facility and (2) a priority for each request of the set of requests; obtaining geographical data for the facility, wherein the geographical data comprises at least one of a set of amounts of time or a set of distances involved in moving the items between the plurality of locations; determining to evaluate a movement plan for the facility that involves the set of requests to move the items between the plurality of locations; and responsive to determining to evaluate the movement plan: obtaining state data for the facility, wherein the state data comprises current locations of a plurality of resources available to execute the set of requests; generating, based at least in part on the priority, a cluster of requests, wherein the cluster of requests comprises the requests from the set of requests with the priority being same or similar; processing the cluster to generate the movement plan that comprises a specific resource to execute each request found in the cluster by conducting iterations on the cluster, wherein each iteration involves: processing the requests remaining in the cluster that have yet to be assigned the specific resource to identify a highest priority request; generating, based at least in part on the geographical data and the state data, at least one of an estimated amount of time or an estimated distance for each resource in the plurality of resources that is eligible to execute the highest priority request, wherein the estimated amount of time or the estimated distance concerns executing the highest priority request to move the item involved in the highest priority request from a first location of the plurality of locations to a second location of the plurality of locations; and identifying, based at least in part on at least one of the estimated amount of time or the estimated distance for each resource in the plurality of resources that is eligible to execute the highest priority request, the specific resource to execute the highest priority request; generating, based at least in part on the movement plan, at least one assignment for having the specific resource identified for at least one request in the set of requests execute the at least one request; and communicating the at least one assignment to initiate the specific resource executing the at least one request to move the item from the first location to the second location.

Embodiment 10: The system of embodiment 9, wherein determining to evaluate the movement plan for the facility comprises determining a triggering event has occurred with respect to the facility.

Embodiment 11: The system of embodiment 9 or 10, wherein at least one of the estimated amount of time or the estimated distance for each resource of the plurality of resources is based at least in part on at least one of the current location of the resource, a distance of a route between the first location and the second location, an amount of time to travel the route, an obstacle involved with the route, or a constraint on the resource in executing the highest priority request.

Embodiment 12: The system of any of embodiments 9 to 11, wherein at least one of the estimated amount of time or the estimated distance for at least one resource of the plurality of resources is based at least in part on at least one of an actual time that the at least one resource took or an actual distance that the at least one resource traveled in performing a previous request with respect to at least one of an estimated amount of time or an estimated distance generated for the resource to perform the previous request.

Embodiment 13: The system of any of embodiments 9 to 12, wherein processing the requests remaining in the cluster that have yet to be assigned the specific resource to identify the highest priority request is performed considering at least one of a type of request involved for each request in the cluster or a type of item involved in each request in the cluster.

Embodiment 14: The system of any of embodiments 9 to 13, wherein processing the requests remaining in the cluster that have yet to be assigned the specific resource to identify the highest priority request involves processing characteristics of each request remaining in the cluster using a machine-learning model to generate a representation on an importance of having the request executed to move the item associated with the request from the first location to the second location, and selecting the request remaining in the cluster with the representation having a highest importance as the highest priority request.

Embodiment 15: A computer-readable medium storing computer-executable instructions that, when executed by computing hardware, configure the computing hardware to perform operations comprising: obtaining (1) a set of requests that involve moving items between a plurality of locations found at a facility and (2) a priority for each request of the set of requests; obtaining geographical data for the facility, wherein the geographical data comprises at least one of a set of amounts of time or a set of distances involved in moving the items between the plurality of locations and a set of constraints on moving the items between the plurality of locations; obtaining state data for the facility, wherein the state data comprises current locations of a plurality of resources available to execute the set of requests; processing the set of requests to generate a movement plan that identifies a specific resource to execute each request found in the set of requests by conducting iterations on the set of requests, wherein each iteration involves: processing the requests remaining in the set of requests that have yet to be assigned the specific resource to identify a highest priority request; generating, based at least in part on the geographical data and the state data, at least one of an estimated amount of time or an estimated distance for each resource in the plurality of resources that is eligible to execute the highest priority request, wherein the estimated amount of time or the estimated distance concerns executing the highest priority request to move the item involved in the highest priority request from a first location of the plurality of locations to a second location of the plurality of locations; and identifying, based at least in part on at least one of the estimated amount of time or the estimated distance for each resource in the plurality of resources that is eligible to execute the highest priority request, the specific resource to execute the highest priority request; generating, based at least in part on the movement plan, at least one assignment for having the specific resource identified for at least one request in the set of requests execute the at least one request; and communicating the at least one assignment to initiate the specific resource executing the at least one request to move the item from the first location to the second location.

Embodiment 16: The computer-readable medium of embodiment 15, wherein communicating the assignment involves sending an electronic communication over a wireless network to the specific resource.

Embodiment 17: The computer-readable medium of embodiment 15 or 16, wherein the specific resource is autonomous equipment, and communicating the assignment involves sending an electronic instruction to the autonomous equipment to have the autonomous equipment move the item from the first location to the second location without human intervention.

Embodiment 18: The computer-readable medium of any of embodiments 15 to 17, wherein the specific resource has at least one of the estimated amount of time or the estimated distance that is shorter than at least one of the estimated amount of time or the estimated distance for each other resource in the plurality of resources that is eligible to execute the highest priority request.

Embodiment 19: The computer-readable medium of any of embodiments 15 to 18, wherein the set of constraints identifies each of the plurality of resources that is eligible to execute the highest priority request.

Embodiment 20: The computer-readable medium of any of embodiments 15 to 19, wherein at least one constraint of the set of constraints is based at least in part on a time of day.

### CONCLUSION

While this specification contains many specific aspect details, these should not be construed as limitations on the scope of any invention or of what may be claimed, but rather as descriptions of features that may be specific to particular embodiments of particular inventions. Certain features that are described in this specification in the context of separate embodiments also may be implemented in combination in a single embodiment. Conversely, various features that are described in the context of a single embodiment also may be implemented in multiple embodiments separately or in any suitable sub-combination. Moreover, although features may be described above as acting in certain combinations and even initially claimed as such, one or more features from a claimed combination may in some cases be excised from the combination, and the claimed combination may be a sub-combination or variation of a sub-combination.

Similarly, while operations are described in a particular order, this should not be understood as requiring that such operations be performed in the particular order described or in sequential order, or that all described operations be performed, to achieve desirable results. In certain circumstances, multitasking and parallel processing may be advantageous. Moreover, the separation of various components in the various embodiments described above should not be understood as requiring such separation in all embodiments, and the described program components (e.g., modules) and systems may be integrated together in a single software product or packaged into multiple software products.

Many modifications and other embodiments of the disclosure will come to mind to one skilled in the art to which this disclosure pertains having the benefit of the teachings presented in the foregoing descriptions and the associated drawings. Therefore, it is to be understood that the disclosure is not to be limited to the specific embodiments disclosed and that modifications and other embodiments are intended to be included within the scope of the appended claims. Although specific terms are employed herein, they are used in a generic and descriptive sense only and not for the purposes of limitation.

## Claims

1. A method comprising:
obtaining, by computing hardware, (1) a set of requests that involve moving items between a plurality of locations found at a facility and (2) a priority for each request of the set of requests;
obtaining, by the computing hardware, geographical data (130) for the facility, wherein the geographical data (130) comprises at least one of a set of amounts of time or a set of distances involved in moving the items between the plurality of locations and a set of constraints on moving the items between the plurality of locations;
obtaining, by the computing hardware, state data (140) for the facility, wherein the state data (140) comprises current locations of a plurality of resources available to execute the set of requests;
generating, by the computing hardware, a movement plan that identifies a specific resource from the plurality of resources to execute each request found in the set of requests by:
generating, based at least in part on the priority, a set of clusters, wherein each cluster of the set of clusters comprises the requests from the set of requests with the priority being same or similar; and
processing, by the computing hardware, each cluster of the set of clusters by conducting iterations on the cluster, wherein each iteration involves:
processing the requests remaining in the cluster that have yet to be assigned the specific resource using a rules-based engine to identify a highest priority request from the request remaining in the cluster that have yet to be assigned the specific resource;
generating, based at least in part on the geographical data (130) and the state data (140), at least one of an estimated amount of time or an estimated distance for each resource in the plurality of resources that is eligible to execute the highest priority request, wherein the estimated amount of time or the estimated distance concerns executing the highest priority request to move the item involved in the highest priority request from a first location of the plurality of locations to a second location of the plurality of locations; and
identifying, based at least in part on at least one of the estimated amount of time or the estimated distance for each resource in the plurality of resources that is eligible to execute the highest priority request, the specific resource to execute the highest priority request;
generating, by the computing hardware and based at least in part on the movement plan, at least one assignment (175) for having the specific resource identified for at least one request in the set of requests execute the at least one request; and
communicating, by the computing hardware, the at least one assignment (175) to initiate the specific resource executing the at least one request to move the item from the first location to the second location.

2. The method of claim 1, wherein the specific resource is autonomous equipment, and communicating the assignment involves sending an electronic instruction to the autonomous equipment to have the autonomous equipment move the item from the first location to the second location without human intervention.

3. The method of claim 1 or 2, wherein the specific resource has at least one of the estimated amount of time or the estimated distance that is shorter than at least one of the estimated amount of time or the estimated distance for each other resource in the plurality of resources that is eligible to execute the highest priority request.

4. The method of claim 3, wherein the plurality of resources comprises equipment configured to haul the items between the plurality of locations, and the set of constraints identifies each of the plurality of resources that is eligible to execute the highest priority request as able to at least one of travel to or have a certain capability needed for at least one of the first location or the second location.

5. The method of claim 3, wherein the plurality of resources comprises personnel operating equipment configured to haul the items between the plurality of locations, and the set of constraints identifies each of the plurality of resources that is eligible to execute the highest priority request as licensed to travel to at least one of the first location or the second location.

6. A system comprising:
a computer-readable medium storing instructions; and
a processing device communicatively coupled to the computer-readable medium, wherein, the processing device is configured to execute the instructions and thereby perform operations comprising:
obtaining (1) a set of requests that involve moving items between a plurality of locations found at a facility and (2) a priority for each request of the set of requests;
obtaining geographical data (130) for the facility, wherein the geographical data (130) comprises at least one of a set of amounts of time or a set of distances involved in moving the items between the plurality of locations;
determining to evaluate a movement plan for the facility that involves the set of requests to move the items between the plurality of locations; and
responsive to determining to evaluate the movement plan:
obtaining state data (140) for the facility, wherein the state data (140) comprises current locations of a plurality of resources available to execute the set of requests;
generating, based at least in part on the priority, a cluster of requests, wherein the cluster of requests comprises the requests from the set of requests with the priority being same or similar;
processing the cluster to generate the movement plan that comprises a specific resource to execute each request found in the cluster by conducting iterations on the cluster, wherein each iteration involves:
processing the requests remaining in the cluster that have yet to be assigned the specific resource to identify a highest priority request;
generating, based at least in part on the geographical data (130) and the state data (140), at least one of an estimated amount of time or an estimated distance for each resource in the plurality of resources that is eligible to execute the highest priority request, wherein the estimated amount of time or the estimated distance concerns executing the highest priority request to move the item involved in the highest priority request from a first location of the plurality of locations to a second location of the plurality of locations; and
identifying, based at least in part on at least one of the estimated amount of time or the estimated distance for each resource in the plurality of resources that is eligible to execute the highest priority request, the specific resource to execute the highest priority request;
generating, based at least in part on the movement plan, at least one assignment (175) for having the specific resource identified for at least one request in the set of requests execute the at least one request; and
communicating the at least one assignment (175) to initiate the specific resource executing the at least one request to move the item from the first location to the second location.

7. The system of claim 6, wherein at least one of the estimated amount of time or the estimated distance for each resource of the plurality of resources is based at least in part on at least one of the current location of the resource, a distance of a route between the first location and the second location, an amount of time to travel the route, an obstacle involved with the route, or a constraint on the resource in executing the highest priority request.

8. The system of claim 6, wherein at least one of the estimated amount of time or the estimated distance for at least one resource of the plurality of resources is based at least in part on at least one of an actual time that the at least one resource took or an actual distance that the at least one resource traveled in performing a previous request with respect to at least one of an estimated amount of time or an estimated distance generated for the resource to perform the previous request.

9. The system of any of claims 6 to 8, wherein processing the requests remaining in the cluster that have yet to be assigned the specific resource to identify the highest priority request is performed considering at least one of a type of request involved for each request in the cluster or a type of item involved in each request in the cluster.

10. The system of any of claims 6 to 8, wherein processing the requests remaining in the cluster that have yet to be assigned the specific resource to identify the highest priority request involves processing characteristics of each request remaining in the cluster using a machine-learning model to generate a representation on an importance of having the request executed to move the item associated with the request from the first location to the second location, and selecting the request remaining in the cluster with the representation having a highest importance as the highest priority request.

11. A computer-readable medium storing computer-executable instructions that, when executed by computing hardware, configure the computing hardware to perform operations comprising:
obtaining (1) a set of requests that involve moving items between a plurality of locations found at a facility and (2) a priority for each request of the set of requests;
obtaining geographical data (130) for the facility, wherein the geographical data (130) comprises at least one of a set of amounts of time or a set of distances involved in moving the items between the plurality of locations and a set of constraints on moving the items between the plurality of locations;
obtaining state data (140) for the facility, wherein the state data (140) comprises current locations of a plurality of resources available to execute the set of requests;
processing the set of requests to generate a movement plan that identifies a specific resource to execute each request found in the set of requests by conducting iterations on the set of requests, wherein each iteration involves:
processing the requests remaining in the set of requests that have yet to be assigned the specific resource to identify a highest priority request;
generating, based at least in part on the geographical data (130) and the state data (140), at least one of an estimated amount of time or an estimated distance for each resource in the plurality of resources that is eligible to execute the highest priority request, wherein the estimated amount of time or the estimated distance concerns executing the highest priority request to move the item involved in the highest priority request from a first location of the plurality of locations to a second location of the plurality of locations; and
identifying, based at least in part on at least one of the estimated amount of time or the estimated distance for each resource in the plurality of resources that is eligible to execute the highest priority request, the specific resource to execute the highest priority request;
generating, based at least in part on the movement plan, at least one assignment (175) for having the specific resource identified for at least one request in the set of requests execute the at least one request; and
communicating the at least one assignment (175) to initiate the specific resource executing the at least one request to move the item from the first location to the second location.

12. The computer-readable medium of claim 11, wherein communicating the assignment involves sending an electronic communication over a wireless network to the specific resource.

13. The computer-readable medium of claim 11 or 12, wherein the specific resource has at least one of the estimated amount of time or the estimated distance that is shorter than at least one of the estimated amount of time or the estimated distance for each other resource in the plurality of resources that is eligible to execute the highest priority request.

14. The computer-readable medium of any of claims 11 to 13, wherein the set of constraints identifies each of the plurality of resources that is eligible to execute the highest priority request.

15. The computer-readable medium of any of claims 11 to 13, wherein at least one constraint of the set of constraints is based at least in part on a time of day.
